# EUROPEAN PATENT APPLICATION

(11) **EP 3 211 618 A1**
(43) Date of publication of application: **30.08.2017**
(21) Application number: 17157104.5
(22) Date of filing: 21.02.2017
(51) Int. Cl.: G08G 1/16, G01C 21/32, G06K 9/00

(54) **ADJACENT LANE VERIFICATION FOR AN AUTOMATED VEHICLE**

(30) Priority: 25.02.2016 US 201662299870 P; 05.12.2016 US 201615368841
(71) Applicant: Delphi Technologies, Inc., Troy, MI 48007-5052 (US)
(72) Inventor: SMITH, Matthew R., Springboro, OH 45066 (US); CHIA, Michael I., Cicero, IN 46034 (US)
(74) Representative: Delphi France SAS

(57) **Abstract**

A lane-change system (10) suitable for use on an automated vehicle includes a camera (16), a location-device (22), and a controller (30). The camera (16) is used to capture an image (18) of a roadway (20) traveled by a host-vehicle (12). The location-device (22) is used to determine a location (24) of the host-vehicle (12) on a digital-map (26). The digital-map (26) includes a lane-count (28) of the roadway (20) traveled by a host-vehicle (12). The controller (30) is in communication with the camera (16) and the location-device (22). The controller (30) is configured to determine a classification (32) of a lane-marking (44) present in the image (18) as one of a dashed-line (34) and a solid-line (36), and determine a position (38) of an alternate-lane (40), said alternate-lane (40) characterized as adjacent to a present-lane (42) traveled by the host-vehicle (12) and available for travel by the host-vehicle (12), wherein the position (38) is determined based on the lane-count (28) and the classification (32).

## Description

### TECHNICAL FIELD OF INVENTION

This disclosure generally relates to a lane-change system suitable for use on an automated vehicle, and more particularly relates to a system that determines a position of an alternate-lane adjacent to a present-lane traveled by a host-vehicle based on a lane-count from a digital map and a classification of lane markings.

### BACKGROUND OF INVENTION

Some automated vehicles are equipped with a location-device (e.g. GPS receiver) that is unable to determine the location of a host-vehicle on a digital-map with better that a few meters of accuracy. What is needed is a way to determine a present-travel-lane the host-vehicle and/or if alternate lanes are available for travel.

### SUMMARY OF THE INVENTION

Advanced Vehicle Assistance systems that can benefit from knowing how likely it is that a lane exists to left or right of the current host position. For example, autonomous driving systems that offer automatic lane changes need to know, not only that a space is occupied, but also whether the lane exists. Systems that seek to increase the autonomy or fuel economy of vehicles operated with adaptive cruise control can also benefit from knowing whether a lane exists. Although vision systems attempt to identify lane markers, the accuracy of this is insufficient to identify whether a lane exists with sufficient reliability.

In accordance with one embodiment, a lane-change system suitable for use on an automated vehicle is provided. The system includes a camera, a location-device, and a controller. The camera is used to capture an image of a roadway traveled by a host-vehicle. The location-device is used to determine a location of the host-vehicle on a digital-map. The digital-map includes a lane-count of the roadway traveled by a host-vehicle. The controller is in communication with the camera and the location-device. The controller is configured to determine a classification of a lane-marking present in the image as one of a dashed-line and a solid-line, and determine a position of an alternate-lane, said alternate-lane characterized as adjacent to a present-lane traveled by the host-vehicle and available for travel by the host-vehicle, wherein the position is determined based on the lane-count and the classification.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of lane-change system in accordance with one embodiment;
Fig. 2 is a traffic scenario encountered by the system of Fig. 1 in accordance with one embodiment;
Fig. 3 is a traffic scenario encountered by the system of Fig. 1 in accordance with one embodiment;
Fig. 4 is a traffic scenario encountered by the system of Fig. 1 in accordance with one embodiment; and
Figs. 5A, 5B, and 5C, in combination, form a flowchart of steps performed by the system of Fig. 1.

### DETAILED DESCRIPTION

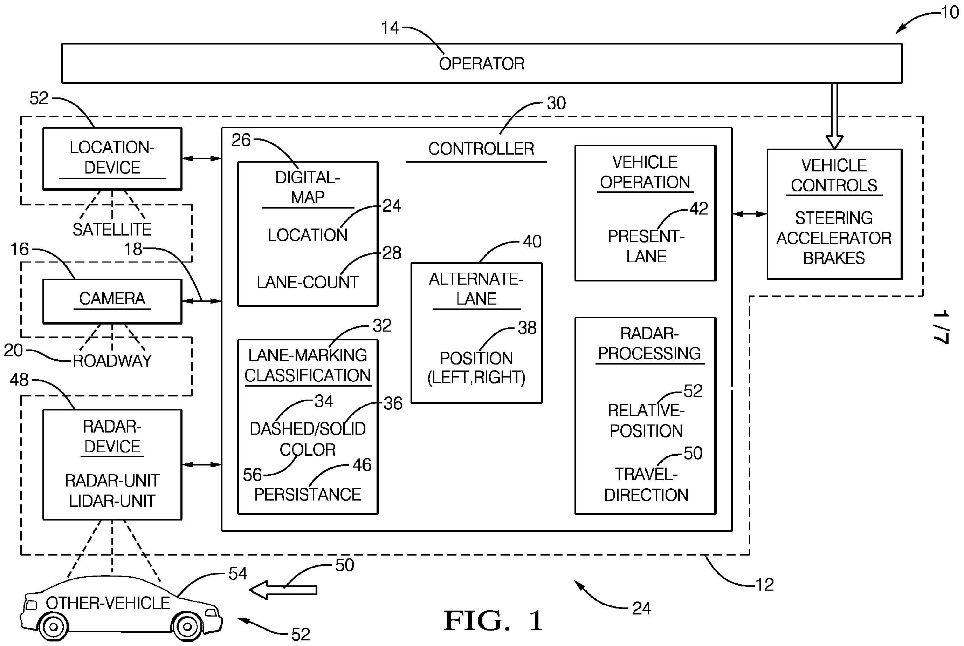

Fig. 1 illustrates a non limiting example of a lane-change system 10, hereafter referred to as the system 10. In general, the system 10 is suitable for use on an automated vehicle such as a host-vehicle 12. As used herein, the term automated vehicle may apply to instances when the host-vehicle 12 is being operated in an automated mode, i.e. a fully autonomous mode, where a human-operator of the host-vehicle 12 may do little more than designate a destination in order to operate the host-vehicle 12. However, full automation is not a requirement. It is contemplated that the teachings presented herein are useful when the host-vehicle 12 is operated in a semi-automated mode where the degree or level of automation may be automated speed control with some form of collision prevention (a.k.a. - Active Cruise Control or ACC) where an operator 14 is generally in control of the steering, but control or operation of the accelerator and optionally the brakes of the host-vehicle 12 are automated or assist the operator 14 when necessary.

The system 10 includes a camera 16 used to capture an image 18 of a roadway 20 traveled by a host-vehicle 12. The camera 16 maybe a single imaging device or the camera 16 may include multiple imaging devices and the images from the multiple devices maybe combine to form a composite image of the roadway 20. By way of example and not limitation, the camera 16 may be a video-camera operating at thirty frames-per-second and capable of detecting light in the visible and infrared spectrums. The camera 16 is preferably mounted on the host-vehicle 12 at a location where the camera 16 has a good view of the roadway 20, and is protected from the elements such as rain, dirt, stones, and the like.

The system 10 includes a location-device 22 used to determine a location 24 of the host-vehicle 12 on a digital-map 26. By way of example and not limitation, the location-device 22 may be a receiver for a global-positioning-system (GPS), the configuration and operation of which is well-known. Alternatively, the location-device 22 may include other means to determine the location 24 of the host-vehicle 12 on the digital-map 26 such as a transceiver used for vehicle-to-infrastructure (V2I) communications and/or a camera used for optical recognition of the landscape (e.g. buildings, signs) around the host-vehicle 12. Advantageously, the digital-map 26 includes a lane-count 28 of the roadway 20 traveled by a host-vehicle 12. That is, information regarding the lane-count 28 indicates how many lanes are present on the roadway 20 that are available for the host-vehicle 12 to use.

The system includes a controller 30 in communication with the camera 16 and the location-device 22. The controller 30 may include a processor (not specifically shown) such as a microprocessor or other control circuitry such as analog and/or digital control circuitry including an application specific integrated circuit (ASIC) for processing data as should be evident to those in the art. The controller 30 may include memory (not specifically shown), including nonvolatile memory, such as electrically erasable programmable read-only memory (EEPROM) for storing one or more routines, thresholds, and captured data. The one or more routines may be executed by the processor to perform steps for determining if a lane exists either to the left or right of the present-lane occupied by the host-vehicle 12 based on signals received by the controller 30 from the camera 16 and the location-device 22, as described herein.

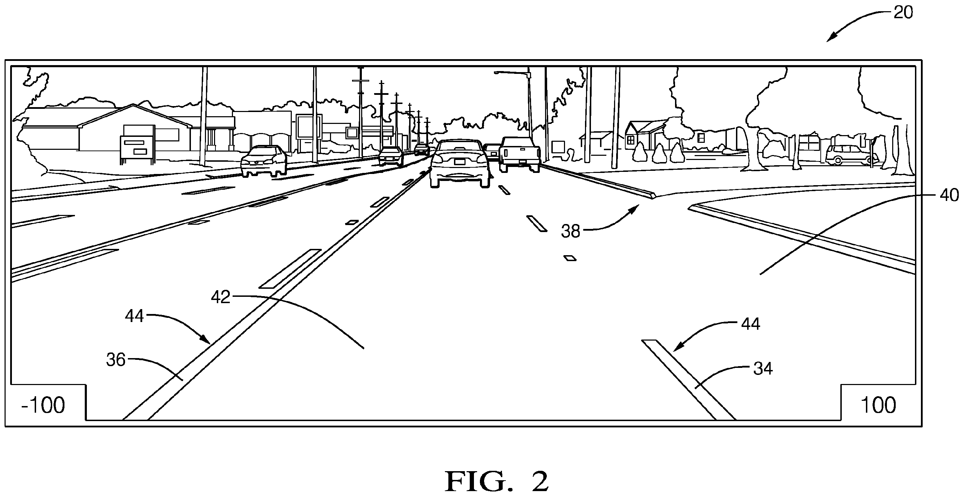

The controller 30 is advantageously configured to determine a classification 32 of a lane-marking 44 (Fig. 2-4) present in the image 18 as one of a dashed-line 34 and a solid-line 36, and determine a position 38 of an alternate-lane 40, if one is available. The alternate-lane 40 is characterized as one that is adjacent to a present-lane 42 traveled by the host-vehicle 12 and is available for travel by the host-vehicle 12. The position 38 of the alternate-lane 40, e.g. to the left and/or right of the travel-lane, is determined based on the lane-count 28 and the classification 32 of the lane-marking(s) 44.

Fig. 2 is a non-limiting example of a roadway 20 where the alternate-lane 40 is characterized as having the position 38 be to the right.

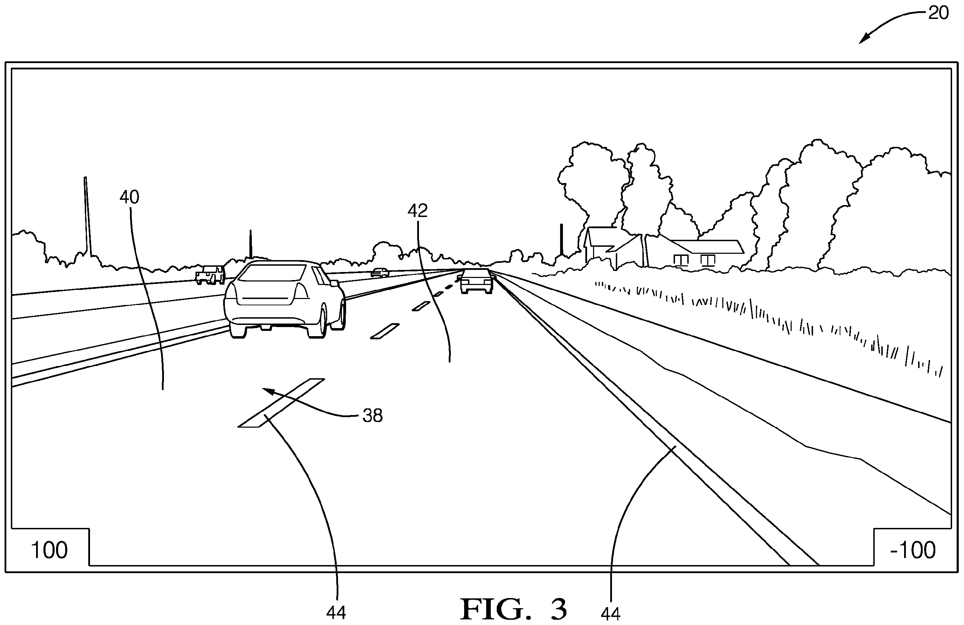

Fig. 3 is a non-limiting example of a roadway 20 where the alternate-lane 40 is characterized as having the position 38 be to the left.

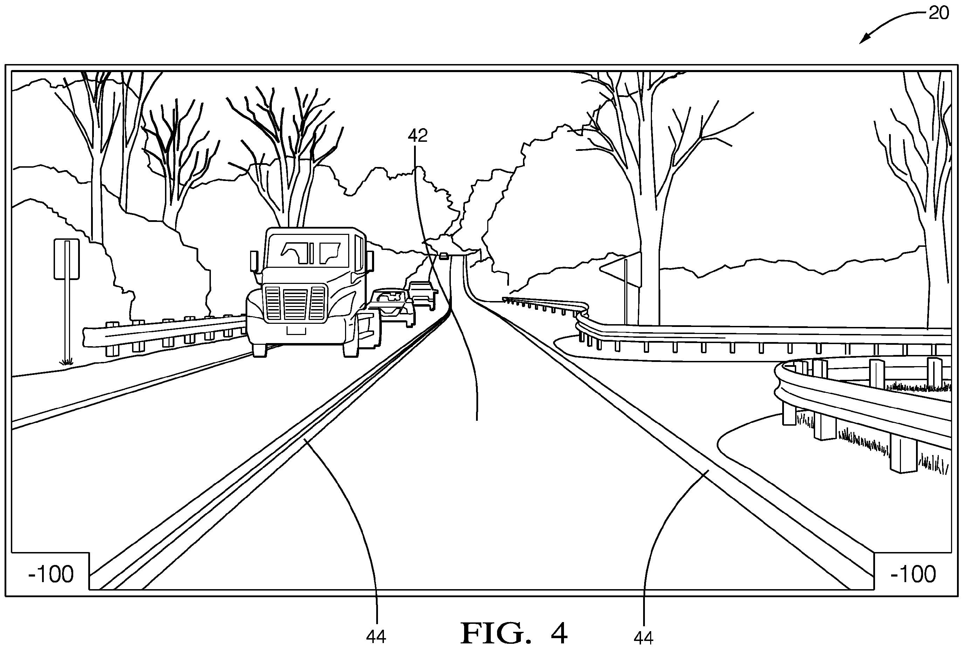

Fig. 4 is a non-limiting example of a roadway 20 where there is no apparent instance of the alternate-lane 40.

Referring again to Fig. 1, the controller 30 may be further configured to determine a persistence 46 of a lane-marking 44 present in the image 18. The persistence 46 is characterized as a time-interval that the lane-marking 44 is continuously detected in the image 18. The controller 30 may be further configured to determine the position 38 of the alternate-lane 40 based on the persistence 46. That is, the more time that there is evidence of a particular lane-marking, the more likely that the lane-marking 44 is actually present and not a false detection.

The system 10 may also include a radar-device 48 used to determine a travel-direction 50 and a relative-position 52 (e.g. left, right, or in-line with the present-lane 42) of an other-vehicle 54 proximate to the host-vehicle 12. As used herein, the term 'proximate to' means that position and speed of the other-vehicle 54 relative to the host-vehicle 12 is relevant to safe operation of the host-vehicle 12. By way of example and not limitation, the other-vehicle 54 or any other vehicle would be considered proximate to the host-vehicle if it were within one-hundred meters (100m) of the host-vehicle 12. The controller 30 may be configured to further determine the position 38 of the alternate-lane 40 based on the travel-direction 50 and the relative-position 52 of the other-vehicle 54.

The controller 30 may be further configured to determine a color 56 of a lane-marking 44 present in the image 18, and further determine the position 38 of the alternate-lane 40 based on the color 56. For example, if the color 56 is determined to be yellow (as would be expected for the double line shown in Fig. 4) rather than white, then that is a further indication that the lane on the other-side of the yellow line is not a suitable instance of the alternate-lane 40

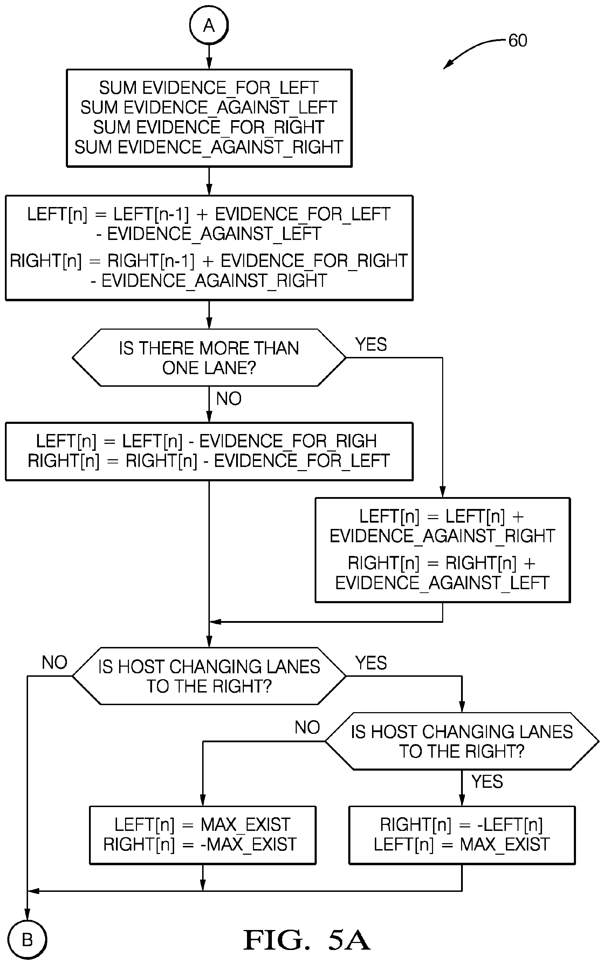

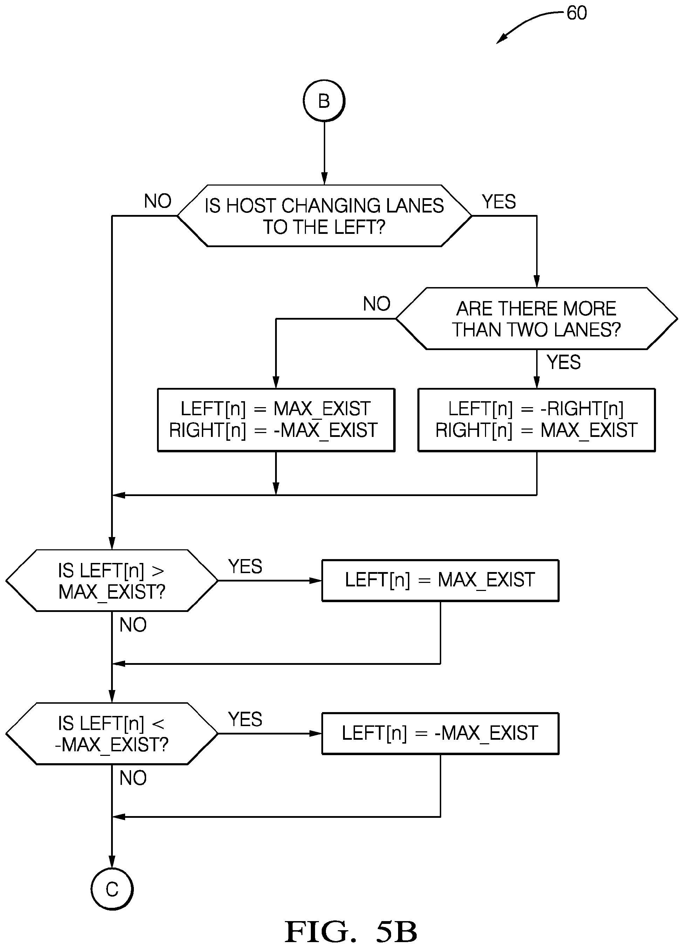

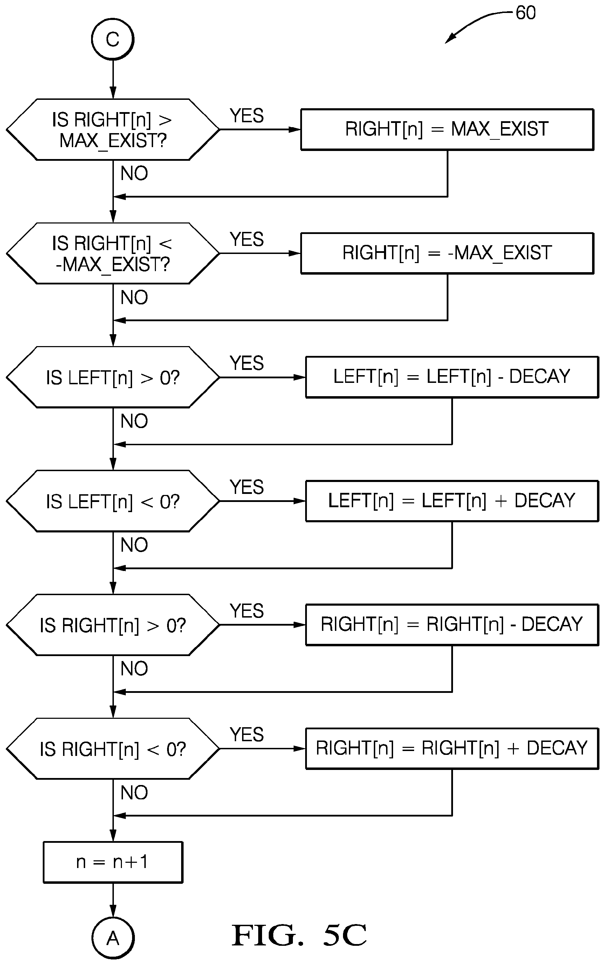

By way of further explanation, the system 10 and method 60 (Figs. 5A-C) of operating the system 10 cooperate to determine whether it is likely that a lane exists to the left and/or right of the host-vehicle 12 by using electronic horizon information (i.e. the digital-map 26) in conjunction with the forward and side sensing systems currently used to detect vehicles and lane markers 44. Over time, the system 10 builds the confidence of lane existence by summing a weighted combination of evidence for and evidence against there being a lane, to produce a positive value when lane existence is likely and a negative value when lane existence is unlikely. A value of zero would mean that there is no information on the existence of a lane. In the absence of evidence for or against the lane existence, the lane existence value decays back toward zero over time.

For example, evidence for there being a lane to the left (assuming right-side driving) is determined by taking a weighted sum of:
- Count of valid targets in the left lane traveling in the same direction as the host-vehicle
- Count of the selected targets in the left lane (from target selection)
- If the electronic horizon specifies that the road is not divided, a non-zero value is added when a valid dashed left lane marker is detected and lane marker's color is white

Evidence against there being a lane to the left (assuming right-side driving) is determined by taking a weighted sum of:
- Count of valid targets in the left lane traveling in the opposite (oncoming) direction as the host-vehicle from the forward and side sensors
- A nonzero value is added when a valid solid left lane marker is detected.
- A nonzero value is added when the left lane marker color is yellow
- A nonzero value is added when traffic sign position reported from vision system is in region of what would be adjacent left lane
- A nonzero value is added when curb or road edge is reported by vision system in region of what would be adjacent left lane

Evidence for there being a lane to the right (assuming right-side driving) is determined by taking a weighted sum of:
- Count of valid targets in the right lane traveling in the same direction as the host-vehicle from the forward and side sensors
- Count of the selected targets in the right lane (from target selection) from the forward and side sensors
- A nonzero value is added when a valid dashed right lane marker is detected

Evidence against there being a lane to the right (assuming right-side driving) is determined by taking a weighted sum of:
- A nonzero value if a valid solid right lane marker is detected.
- A nonzero value is added when traffic sign position reported from vision system is in region of what would be adjacent right lane
- A nonzero value is added when curb or road edge is reported by vision system in region of what would be adjacent right lane
- A nonzero value is added when position of closer lateral range stationary objects is in region of what would be adjacent right lane

This evidence for and against is then accumulated over time, such that left lane existence is equal to a weighted sum of:
- + left lane existence from previous cycle minus decay factor when above a certain speed
- + evidence for left lane existence
- evidence against left lane existence
- evidence for right lane existence only if electronic horizon specifies that there are two lanes in the host direction
- + evidence against right lane existence only if electronic horizon specified that there are at least two lanes in the host direction

This evidence for and against is then accumulated over time, such that right lane existence is equal to a weighted sum of:
- + right lane existence from previous cycle minus decay factor when above a certain speed
- + evidence for right lane existence
- evidence against right lane existence
- evidence for left lane existence only if electronic horizon specifies that there are two lanes in the host direction
- + evidence against left lane existence only if electronic horizon specified that there are at least two lanes in the host direction

When the digital-map 26 or date from an electronic horizon device specifies that there is an unknown number of lanes or only one lane, the lane existence can be set to a specific value or not be allowed to exceed a certain value. Lane existence values can be constrained to not exceed positive and negative values that represent maximum confidence that a lane exists or does not exist respectively. A zero value is interpreted as having no information about lane existence.

When the host-vehicle 12 is observed to change lanes, the lane that the host-vehicle 12 came from is initially set to the maximum likelihood value. The new adjacent lane in the direction of the lane change is initially set to the minimum likelihood value (meaning that the lane does not exist) if it is a two or one-lane road. If it is a three-lane road, the likelihood value of the lane in the direction of the lane change is set to -1 multiplied by the likelihood value of the lane that was adjacent before the lane change in the direction away from the lane change. For example, if we were traveling in the middle lane on a known three lane road and a left lane existed prior to a right lane change, then we know that the right lane does not exist. For cases with an unknown or greater than three lanes, the likelihood value of the new adjacent lane in the direction of the lane change is initially set to zero.

Fig. 2 shows the percentage results on a DV page where there is high (100%) confidence that there is no same-direction lane on the left and high (100%) confidence that there is a lane on the right. DV tool page showing the percentage values for lane existence on the left and right side of the page on two-lane road.

Fig. 3 shows the DV tool page showing the percentage values for lane existence on the left and right side of the page on highway.

Fig. 4 shows the DV tool page showing the percentage values for lane existence on the left and right side of the page on one-lane road.

Figs. 5A-C illustrate a non-limiting example of a method 60 or steps performed by the system to determine the location of the alternate lane.

While this invention has been described in terms of the preferred embodiments thereof, it is not intended to be so limited, but rather only to the extent set forth in the claims that follow.

## Claims

1. A lane-change system (10) suitable for use on an automated vehicle, said system (10) comprising:
a camera (16) used to capture an image (18) of a roadway (20) traveled by a host-vehicle (12);
a location-device (22) used to determine a location (24) of the host-vehicle (12) on a digital-map (26), wherein the digital-map (26) includes a lane-count (28) of the roadway (20) traveled by a host-vehicle (12); and
a controller (30) in communication with the camera (16) and the location-device (22), said controller (30) configured to
determine a classification (32) of a lane-marking (44) present in the image (18) as one of a dashed-line (34) and a solid-line (36); and
determine a position (38) of an alternate-lane (40), said alternate-lane (40) characterized as adjacent to a present-lane (42) traveled by the host-vehicle (12) and available for travel by the host-vehicle (12), wherein the position (38) is determined based on the lane-count (28) and the classification (32).

2. The system (10) in accordance with claim 1, wherein the controller (30) is further configured to determine a persistence (46) of a lane-marking (44) present in the image (18), said persistence (46) characterized as a time-interval that the lane-marking (44) is continuously detected in the image (18), and further determine the position (38) of the alternate-lane (40) based on the persistence (46).

3. The system (10) in accordance with claim 1 or 2, wherein the system (10) includes
a radar-device (48) used to determine a travel-direction (50) and a relative-position (52) of an other-vehicle (54) proximate to the host-vehicle (12), and
the controller (30) is configured to further determine the position (38) of the alternate-lane (40) based on the travel-direction (50) and the relative-position (52) of the other-vehicle (54).

4. The system (10) in accordance with claim 3, wherein the controller (30) is further configured to determine a color (56) of a lane-marking (44) present in the image (18), and further determine the position (38) of the alternate-lane (40) based on the color (56).

5. The system (10) in accordance with any one of claims 1 to 4, wherein the controller (30) is further configured to determine a color (56) of a lane-marking (44) present in the image (18), and further determine the position (38) of the alternate-lane (40) based on the color (56).
